# EUROPÄISCHE PATENTSCHRIFT

(11) **EP 0 910 819 B1**
(45) Veröffentlichungstag und Bekanntmachung des Hinweises auf die Patenterteilung: **25.09.2002**
(21) Anmeldenummer: 97932734.3
(22) Anmeldetag: 03.07.1997
(51) Int. Cl.: G05B 19/418

(54) **PROZESSAUTOMATISIERUNGSSYSTEM**
PROCESS AUTOMATION SYSTEM
SYSTEME D'AUTOMATISATION DE PROCESSUS

(30) Priorität: 08.07.1996 DE 19627464
(43) Veröffentlichungstag der Anmeldung: 28.04.1999
(73) Patentinhaber: SIEMENS AKTIENGESELLSCHAFT, 80333 München (DE)
(72) Erfinder: BIEBER, Jürgen, D-76275 Ettlingen (DE)
(86) Internationale Anmeldenummer: DE9701407
(87) Internationale Veröffentlichungsnummer: WO98001797

(56) Entgegenhaltungen:
- EP-A- 0 369 188
- EP-A- 0 471 882
- WO-A-90/02982
- US-A- 5 231 585
- NOBUYUKI YOKOKAWA ET AL: "DISTRIBUTED DIGITAL CONTROL SYSTEM: THE EX-5000 SERIES" HITACHI REVIEW, Bd. 42, Nr. 2, 1.April 1993, Seiten 87-94, XP000395698
- ADAM W ET AL: "FERNBETREUUNG VON CNC-GESTEUERTEN FERTIGUNGSANLAGEN" ZWF ZEITSCHRIFT FUER WIRTSCHAFTLICHEN FABRIKBETRIEB, Bd. 91, Nr. 3, 1.März 1996, Seiten 84-87, XP000559640

## Beschreibung

Bei Prozeßautomatisierungssystemen übernehmen Bedien- und Beobachtungseinrichtungen die Bedienung und Beobachtung von Prozessen der Steuerungs- und Regelungstechnik sowie die Archivierung und Protokollierung anfallender Prozeßwerte bzw. Prozeßmeldungen von unterlagerten Automatisierungseinrichtungen. Um einen Prozeß gleichzeitig von mehreren Bedienern beobachten und ggf. bedienen zu lassen, bedient man sich heutzutage sog. Client-Server-Konzepte, bei denen der Server, auch als Host-Station oder Leitrechner bezeichnet, die gesamte Rechenleistung übernimmt und die Clients, auch als Terminals bezeichnet, nur die Grafikausgabe übernehmen und Bedieneingaben bzw. Bildwechsel über Maus und Tastatur ermöglichen. An der Host-Station befindet sich ein Prozeßbus, der die Verbindung zu den Automatisierungseinrichtungen herstellt, sowie ein Terminalbus, der die physikalische Verbindung zu den Terminals herstellt. Host-Station und Terminals befinden sich zumeist in der Leitwarte oder in benachbarten Räumen. Ein solches Prozeßautomatisierungssystem ist in der Veröffentlichung von Nobuyuki Yokokawa et al unter dem Title "Distributed digital control system, The Ex-5000 Series" in der Hitachi Review, Bd. 42, Nr. 2, 1 April 1993, Seiten 87-94 veröffentlicht.

Immer komplexere Prozesse bzw. Automatisierungssysteme erfordern höchste Ansprüche an die Host-Station, was Rechenleistung und Speicherkapazität betrifft. Sicherheitsanforderungen und auch Vorschriften, z. B. für den vollständigen Nachweis der Entstehung einer Charge, erfordern oft den Aufbau einer weiteren redundanten Anlage. Dies und die Pflege und Wartung der Geräte bedeutet einen erhöhten finanziellen Aufwand für den Anlagenbetreiber.

Der Erfindung liegt die Aufgabe zugrunde, bei einem Prozeßautomatisierungssystem den gerätetechnischen Aufwand für den Anlagenbetreiber zu verringern. Gemäß der Erfindung wird die Aufgabe durch das in Anspruch 1 angegebene Prozeßautomatisierungssystem gelöst.

Vorteilhafte Weiterbildungen des erfindungsgemäßen Automatisierungssystems sind den Unteransprüchen zu entnehmen.

Der wesentliche Vorteil des erfindungsgemäßen Automatisierungssystems liegt darin, daß die erforderliche Rechenleistung von einem Leitrechner außerhalb der Leitwarte der automatisierten Anlage, insbesondere in einem zentralen Rechenzentrum, erbracht werden kann, so daß der Anlagenbetreiber selbst keinen eigenen Leitrechner (Host-Station) benötigt und somit für ihn die Anschaffungskosten, Pflege und Wartung entfallen. Insbesondere die Möglichkeit der gleichzeitigen Bedienung mehrerer Automatisierungssysteme durch den Leitrechner erlaubt es, diesen als Superrechner zu konzipieren, der sich durch eine besonders hohe Rechenleistung und Speicherkapazität auszeichnet, wodurch sich der Nutzen für jedes einzelne Automatisierungssystem erhöht. Nahezu alle relevanten Daten können im Hauptspeicher gespeichert werden und alle wichtigen Prozeßdaten nahezu unbegrenzt archiviert und dem Anlagenbetreiber zur Verfügung gestellt werden. Ein weiterer Vorteil besteht in der Möglichkeit eines redundanten Aufbaus des Automatisierungssystems, der, was den Leitrechner betrifft, im Rechenzentrum für den Anlagenbetreiber unsichtbar realisiert werden kann.

Zur weiteren Erläuterung der Erfindung wird im folgenden auf die Figuren der Zeichnung Bezug genommen, von denen
- Figur 1: beispielhaft ein Blockschaltbild des erfindungsgemäßen Prozeßautomatisierungssystems und
- Figur 2: ein Beispiel für die Datenübertragungsstruktur in dem Prozeßautomatisierungssystem zeigen.

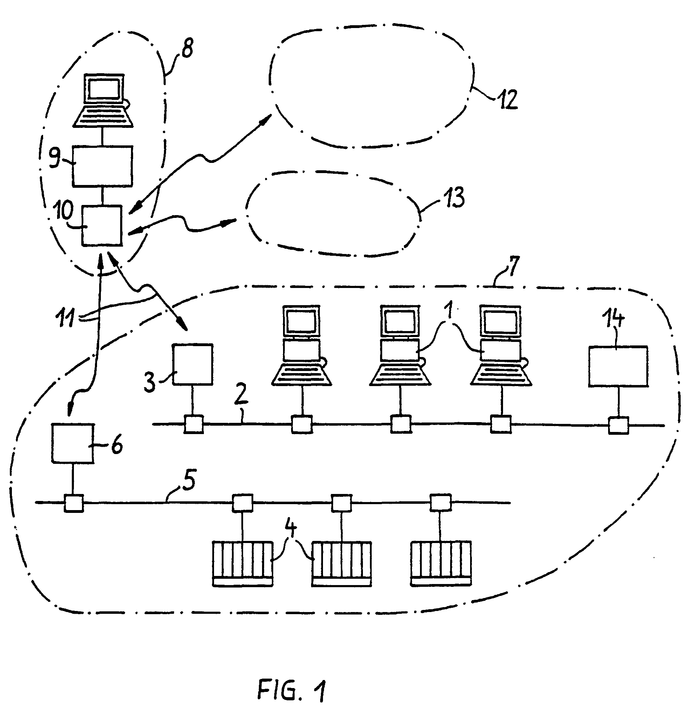

Bei dem in Figur 1 gezeigten Prozeßautomatisierungssystem sind in einer Bedien- und Beobachtungsebene Terminals 1 über einen Terminalbus 2 untereinander und mit einer Sende-/Empfangseinrichtung 3 verbunden. In einer prozeßnahen Automatisierungsebene sind Automatisierungseinrichtungen 4, z. B. speicherprogrammierbare Steuerungen, ebenfalls über einen Prozeßbus 5 mit einer weiteren Sende-/Empfangseinrichtung 6 verbunden. Während die Komponenten 1 bis 6 Bestandteile einer hier nur angedeuteten Anlage 7 sind, in der ein von dem Prozeßautomatisierungssystem gesteuerter technischer Prozeß abläuft, ist außerhalb der Anlage 7, z. B. in einem Rechenzentrum 8, ein als Superrechner ausgebildeter Leitrechner 9 angeordnet, der über eine dritte Sende-/Empfangseinrichtung 10 und ein Datenübertragungsmedium 11 zur Datenfernübertragung, z. B. eine Funkverbindung, Satellitenverbindung oder ein Telekommunikationsnetz, mit den Sende-/Empfangseinrichtungen 3 und 6 der Anlage 7 kommuniziert. Über die Sende-/Empfangseinrichtung 10 und das Datenübertragungsmedium 11 kann der Leitrechner 9 mit weiteren, hier nicht gezeigten Sende-/Empfangseinrichtungen in weiteren Anlagen 12, 13 kommunizieren. Abweichend von dem gezeigten Ausführungsbeispiel können auch den einzelnen Terminals 1 oder Terminalgruppen jeweils eigene Sende-/Empfangseinrichtungen zugeordnet werden. Entsprechendes gilt auch für die Automatisierungseinrichtungen 4. Darüber hinaus können die Sende-/Empfangseinrichtungen 3, 6, 10 sowie der Leitrechner 9 redundant ausgeführt werden. So kann z. B. die Sende-/Empfangseinrichtung 10 eine Umschalteinrichtung enthalten, um im Bedarfsfall auf einen weiteren redundanten Leitrechner umschalten zu können.

Im Unterschied zu herkömmlichen Automatisierungssystemen ist der Prozeßbus 5 der unterlagerten Automatisierungseinrichtungen 4 nicht an die Terminals 1 der Bedien- und Beobachtungsebene angebunden; statt dessen werden die Daten aus der prozeßnahen Automatisierungsebene über das Datenübertragungsmedium 11 an den Leitrechner 9 übermittelt.

Die Projektierung des Prozeßautomatisierungssystems kann über die Terminals 1 und einen Projektierungsrechner 14 in der Bedien- und Beobachtungsebene erfolgen. Danach laufen die projektierten Anlagenbilder in dem Leitrechner 9 ab. Auf den Terminals 1 erfolgt dann nur noch die grafische Ausgabe der Anlagenbilder und die Prozeßbedienung. Eine Änderung der Anlagendaten, also eine Änderung der Projektierung, wird von der Bedien- und Beobachtungsebene an den Leitrechner 9 übermittelt, der die Änderung übernimmt und die neue Projektierungsform an alle Terminals 1 überträgt.

Mit einer Identifikationsnummer bzw. dem Paßwort des Leitrechners 9 kann sich jedes beliebige Terminal auf der Welt mit dem Leitrechner 9 verbinden lassen und den Prozeß beobachten und bei geeigneter Zugangsberechtigung auch bedienen.

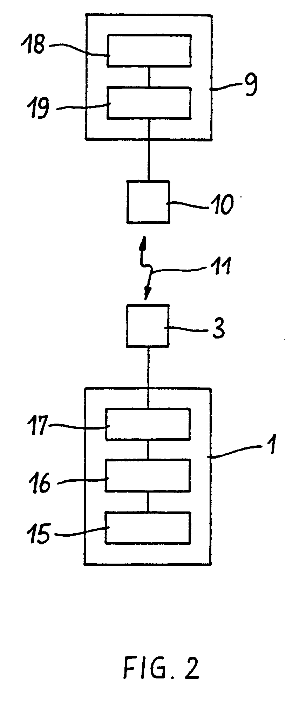

Figur 2 zeigt den Leitrechner 9, der über die Sende-/Empfangseinrichtung 10, das Datenübertragungsmedium 11 und die Sende-/Empfangseinrichtung 3 mit dem Terminal 1 kommuniziert. In dem Terminal 1 ist dessen Standardsoftware 15 durch eine Kommunikationssoftware 16 erweitert, die die Aufgabe der Datenübertragung von und zum Terminal 1 übernimmt. Die Kommunikationssoftware 16 läuft als eigenständige Task und spricht einen Kommunikationstreiber 17 an, der die Schnittstelle zu der Sende-/Empfangseinrichtung 3 bildet. Der Leitrechner 9 enthält zusätzlich zu seiner Standardsoftware 18 einen Modem-Funk-Treiber 19.

## Patentansprüche

1. Prozeßautomatisierungssystem mit in einer Bedien- und Beobachtungsebene vorhandenen Terminals (1) zum Bedienen und Beobachten eines Prozesses, die an einer Sende-/Empfangseinrichtung (3) angeschlossen sind, mit in einer untergeordneten Automatisierungsebene vorhandenen, prozeßnahen Automatisierungseinrichtungen (4), die mit einer weiteren Sende-/Empfangseinrichtung (6) in Verbindung stehen, und mit einem Leitrechner (9), der an einer dritten Sende-/Empfangseinrichtung (10) angeschlossen ist, **dadurch gekennzeichnet, daß** die dritte Sende-/Empfangseinrichtung (10) über ein Datenübertragungsmedium (11) mit der ersten und der zweiten Sende-/Empfangseinrichtung (3, 6) in der Weise kommuniziert, daß Daten zwischen der Bedien- und Beobachtungsebene und der Automatisierungsebene über den Leitrechner (9) ausgetauscht werden.

2. Prozeßautomatisierungssystem nach Anspruch 1, **dadurch gekennzeichnet, daß** das Datenübertragungsmedium (11) eine Funkverbindung ist.

3. Prozeßautomatisierungssystem nach Anspruch 1 oder 2, **dadurch gekennzeichnet, daß** das Datenübertragungsmedium (11) ein Telekommunikationsnetz ist.

4. Prozeßautomatisierungssystem nach einem der vorangehenden Ansprüche, **dadurch gekennzeichnet, daß** die Terminals (1) über einen Terminalbus (2) untereinander und mit der Sende-/Empfanseinrichtung (3) verbunden sind.

5. Prozeßautomatisierungssystem nach einem der vorangehenden Ansprüche, **dadurch gekennzeichnet, daß** die Automatisierungseinrichtungen (4) über einen Prozeßbus (5) untereinander und mit der weiteren Sende-/Empfangseinrichtung (6) verbunden sind.

6. Prozeßautomatisierungssystem nach einem der vorangehenden Ansprüche, **dadurch gekennzeichnet, daß** der Leitrechner (9) zur Führung mindestens eines weiteren Prozesses ausgebildet ist und Bestandteil mindestens eines weiteren Prozeßautomatisierungssystems (12, 13) ist, in welchem in einer weiteren Bedien- und Beobachtungsebene vorhandene weitere Terminals an einer vierten Sende-/Empfangseinrichtung angeschlossen sind, in einer weiteren untergeordneten Automatisierungsebene weitere prozeßnahe Automatisierungseinrichtungen mit einer fünften Sende-/Empfangseinrichtung in Verbindung stehen und in welchem die dritte Sende-/Empfangseinrichtung über das Datenübertragungsmedium (11) mit der vierten und der fünften Sende-/Empfangseinrichtung kommuniziert.

7. Prozeßautomatisierungssystem nach einem der vorangehenden Ansprüche, **dadurch gekennzeichnet, daß** die Sende-/Empfangseinrichtungen (3, 6, 10) zumindest teilweise redundant ausgeführt sind.

8. Prozeßautomatisierungssystem nach einem der vorangehenden Ansprüche, **dadurch gekennzeichnet, daß** der Leitrechner (9) redundant ausgebildet ist.

## Claims

1. Process automation system having terminals (1), present at an operation and monitoring level, for operating and monitoring a process, which terminals are connected to a transmit/receive device (3), having automation devices (4), local to the process and present at a subordinate automation level, which are linked to a further transmit/receive device (6), and having a master computer (9) which is connected to a third transmit/receive device (10), **characterised in that** the third transmit/receive device (10) communicates via a data transmission medium (11) with the first and second transmit/receive devices (3, 6), such that data is exchanged between the operation and monitoring level and the automation level via the master computer (9).

2. Process automation system according to Claim 1, **characterised in that** the data transmission medium (11) is a radio link.

3. Process automation system according to Claim 1 or 2, **characterised in that** the data transmission medium (11) is a telecommunications network.

4. Process automation system according to one of the preceding claims, **characterised in that** the terminals (1) are connected via a terminal bus (2) to one another and to the transmit/receive device (3).

5. Process automation system according to one of the preceding claims, **characterised in that** the automation devices (4) are connected via a process bus (5) to one another and to the further transmit/receive device (6).

6. Process automation system according to one of the preceding claims, **characterised in that** the master computer (9) is designed for managing at least one further process and is a component of at least one further process automation system (12, 13), in which further terminals, present at a further operation and monitoring level, are connected to a fourth transmit/receive device, further automation devices, local to a process and at a further subordinate automation level, are linked to a fifth transmit/receive device, and in which the third transmit/receive device communicates via the data transmission medium (11) with the fourth and the fifth transmit/receive devices.

7. Process automation system according to one of the preceding claims, **characterised in that** the transmit/receive devices (3, 6, 10) have an at least partially redundant design.

8. Process automation system according to one of the preceding claims, **characterised in that** the master computer (9) has a redundant design.

## Revendications

1. Système d'automatisation de processus comportant des terminaux (1) qui se trouvent dans un niveau de contrôle et d'observation, qui sont destinés au contrôle et à l'observation d'un processus et qui sont raccordés à un dispositif d'émission et de réception (3), des dispositifs d'automatisation (4) qui se trouvent dans un niveau d'automatisation subordonné, qui sont adaptés au processus et qui sont en liaison avec un autre dispositif d'émission et de réception (6) et un ordinateur pilote (9) qui est raccordé à un troisième dispositif d'émission et de réception (10), **caractérisé par le fait que** le troisième dispositif d'émission et de réception (10) communique par l'intermédiaire d'un moyen de transmission de données (11) avec le premier et le deuxième dispositif d'émission et de réception (3, 6) de telle sorte que des données sont échangées entre le niveau de contrôle et d'observation et le niveau d'automatisation par l'intermédiaire de l'ordinateur pilote (9).

2. Système d'automatisation de processus selon la revendication 1, **caractérisé par le fait que** le moyen de transmission de données (11) est une liaison par radio.

3. Système d'automatisation de processus selon la revendication 1 ou 2, **caractérisé par le fait que** le moyen de transmission de données (11) est un réseau de télécommunication.

4. Système d'automatisation de processus selon l'une des revendications précédentes, **caractérisé par le fait que** les terminaux (1) sont reliés par l'intermédiaire d'un bus de terminal (2) entre eux et au dispositif d'émission et de réception (3).

5. Système d'automatisation de processus selon l'une des revendications précédentes, **caractérisé par le fait que** les dispositifs d'automatisation (4) sont reliés par l'intermédiaire d'un bus de processus (5) entre eux et à l'autre dispositif d'émission et de réception (6).

6. Système d'automatisation de processus selon l'une des revendications précédentes, **caractérisé par le fait que** l'ordinateur pilote (9) est conçu pour gérer au moins un autre processus et fait partie d'au moins un autre système d'automatisation de processus (12, 13) dans lequel d'autres terminaux se trouvant dans un autre niveau de contrôle et d'observation sont raccordés à un quatrième dispositif d'émission et de réception, d'autres dispositifs d'automatisation adaptés au processus et se trouvant dans un autre niveau d'automatisation subordonné sont en liaison avec un cinquième dispositif d'émission et de réception et le troisième dispositif d'émission et dé réception communique par l'intermédiaire du moyen de transmission de données (11) avec le quatrième et le cinquième dispositif d'émission et de réception.

7. Système d'automatisation de processus selon l'une des revendications précédentes, **caractérisé par le fait que** les dispositifs d'émission et de réception (3, 6, 10) sont réalisés au moins en partie de façon redondante.

8. Système d'automatisation de processus selon l'une des revendications précédentes, **caractérisé par le fait que** l'ordinateur pilote (9) est conçu de façon redondante.
